# EUROPEAN PATENT APPLICATION

(11) **EP 2 661 961 A1**
(43) Date of publication of application: **13.11.2013**
(21) Application number: 12167536.7
(22) Date of filing: 10.05.2012
(51) Int. Cl.: A01K 15/02

(54) **A modular climbing tree and method of assembling the climbing tree**

(71) Applicant: Kattens No. 1, 4130 Viby Sj. (DK)
(72) Inventor: Hansen, Peter Werner, 1432 Copenhagen K (DK); Jensen, Per Højland, 2690 Karlslunde (DK); Bjerg, Bjarne, 2500 Valby (DK); Malsø, Ib, 3460 Birkerød (DK)
(74) Representative: Holme Patent A/S

(57) **Abstract**

A modular climbing tree comprises at least a plurality of poles (34) and connecting components (1;21;36;41) configured for connecting the poles (34) or for connecting poles (40) and accessories. The connecting components (1;21;36;41) comprises at least one connecting component (1;21;36;41) that has a first connecting part (3;23;37;42) configured for fastening to a pole (34) or a surface and an opposite second connecting part (4;22;4';43) having at least one male coupling element (5a,5b) and at least one female coupling element (6a,6b) for engaging and locking with mating coupling elements (6a,6b;5a,5b) of another connecting component (1;21;36;41) selected from the connecting components (1;21;36;41). The at least one male coupling elements (5a,5b) and at least one female coupling elements (6a,6b) on opposing connecting component (1;21;36;41) are engaged to interlock. Thereafter the opposite connecting component (1;21;36;41) are rotated about their common axis to further lock together in detachable manner.

## Description

The present invention relates to a modular climbing tree comprising at least a plurality of poles and connecting components configured for connecting the poles or for connecting poles and accessories.

It the nature a cat climb trees to get a better view of their surroundings, to help them see and hide from potential dangers or prey, or just to rest or to exercise their climbing skills. Scratching is a territorial instinct by which cats place their mark, e.g. by clawing to leave visible signs of claw marks and scent marks via the paw glands.

A domestic cat has the same instinct and needs to be satisfied. Cat climbing trees and scratching posts are common cat furniture that prevent practicing indoor climbing of furniture and scratching of furniture and wall paper. So cat climbing trees and scratching posts offer the cat an attractive artificial climbing environment and a surface and place for allowable scratching.

There exist numerous commercially available climbing trees and scratching posts on the market, the most popular being carpeted. Most commercial climbing trees are modular climbing trees constructed and assembled at the location of use from smaller building elements. Assembling of known modular climbing trees is however often complicated. It may require special instruction and tools, and it may be time-consuming. Often disassembling is impossible without destroying the building elements, which cannot be reused. Moreover, the assembled climbing tree may be a wobbly construction susceptible to collapse in response to sudden loads, e.g. when a cat takes-off or lands on it, on one hand because the person assembling the climbing tree got is wrong or did not manage to make a stable assembling, or on the other hand because the building elements do not or cannot confer sufficient structural stability to the climbing tree in assembled state.

Some of these disadvantages are remedied by means of the modular climbing tree known from European patent no. EP1755745. The poles of the climbing tree are joined by means of annular plastic brackets. An annular plastic bracket consists of several equal-sized bracket parts that are screwed together to be joined around a pole fitting the opening of the annular plastic bracket. The annular plastic bracket has one or more mainly flat projections with fastening elements in the form of threaded rod, threads or threaded bolts for securing of other brackets or poles. The top or bottom of the flat projections are designed and fitted for the same purpose. Thus, when two poles needs coupling to each other to make a branch on a tree, annular plastic brackets are mounted in surrounding relationship on each pole, and the flat projections on e.g. two similar annular plastic bracket parts are laboriously screwed together.

A disadvantage of this known modular climbing tree is that two adjacent contacting flat projections of two annular separate brackets together define a small vulnerable plastic bridge between two connected poles. Although a bracket surrounds a pole the bracket area in contact with the pole is limited. The structural integrity of the bridge is therefore essential in maintaining the climbing tree structural stable when the climbing tree is subjected to loads. To that aspect fastening elements also serve to reinforce the bridge and cannot be dispensed with without the climbing tree looses structural integrity. However fastening elements needs to be applied to the plastic bracket after moulding, which adds costs to the manufacturing process, and makes in particular the application point of the bracket material susceptible to rupture when stressed. A further disadvantage is that if the equal-sized bracket parts of the annular plastic bracket are not screwed properly together the bracket is to big and clasps too little around the pole in order to maintain position during loads and stresses provided to the climbing tree. Yet a further disadvantage is that the many screws needs to be fastened one at a time, which takes considerately time both during assembling and disassembling.

Within the context of the present invention a "pole" is to be understood as a tubular element having any cross-section including oval, circular, or polygonal. A pole may be hollow, be partly hollow or even for some embodiments be solid.

A modular climbing tree, scratching posts and stands are described in relation to prior art being cats. It should however be understood that the climbing tree is meant for any animal or individual, and that the connecting component may be useful for assembling any kind of lattice or lattice-like structure, including e.g. climbing frames for small children. The term "climbing tree" covers both simple posts, small climbing trees and large complex climbing trees with many branches and accessoires.

It is the aim of the present invention to provide a modular climbing tree as an alternative to known modular climbing trees.

So in a first aspect according to the present invention is provided a modular climbing tree of the kind mentioned in the opening paragraph which is easy and fast to assemble and/or disassemble.

In a second aspect according to the present invention is provided a modular climbing tree of the kind mentioned in the opening paragraph which can be assembled without use of screws and bolts on the connecting components.

In a third aspect according to the present invention is provided a modular climbing tree of the kind mentioned in the opening paragraph which can hold the weight of objects or animals, and is structural stable also when subjected to loads, and is well balanced so that e.g. moving animals cannot tilt it.

In a fourth aspect according to the present invention is provided a modular climbing tree of the kind mentioned in the opening paragraph including special connecting components for optional connection to surfaces and accessories.

In a fifth aspect according to the present invention is provided a modular climbing tree of the kind mentioned in the opening paragraph including special connecting components for mounting accessories.

The novel and unique whereby these and other aspects are achieved according to the present invention consist in that the connecting components comprise
- at least one connecting component that has a first connecting part configured for fastening to a pole or a surface, and
- an opposite second connecting part having at least one male coupling element and at least one female coupling element for engaging and locking with mating coupling elements of another connecting component selected from the connecting components.

The connection of the at least one connecting component with another connecting component is obtained in an instant without using tools such as screw drivers, wrenches or spanners. When two connecting components are connected the first connecting component's at least one male coupling element can just be clicked into the other second connecting components at least one female coupling element simultaneously with the first connecting component's at least one female coupling element is clicked into the other second connecting component's male coupling element. The connecting operation is simple and obvious to an individual without special training and the mere presence of respective male coupling elements and female coupling elements also provide a visual guidance for alignment and correct connection of various connecting components. A further advantage over prior art climbing trees is that the free surfaces of the respective connecting component's second connecting parts can be brought into direct contact so that substantially no bridge member exists between opposite connecting components thereby making the connection of said elements less vulnerable to torsional stresses and load applications.

The at least one male coupling element and at least one female coupling element on opposite confronting connecting components advantageously serve to enable a smooth and easy interconnection of two connecting components having second connecting parts facing and engaging each other. In one embodiment two connecting components of the same kind may serve for end-to-end connecting two poles, which are provided with said respective connecting components at one or both ends. In another embodiment the at least one connecting component may be provided at an end of a pole and the other connecting component, which is of a different kind than the at least one connecting component, but has mating male coupling elements and female coupling elements too, may be provided on the circumferential wall of the pole to make a branch on a climbing tree when the connecting components interlocks. Preferably the second connecting part of a connecting component has a free end with a flat top surface wherefrom the male coupling elements protrude parallel with the centre axis of the connecting component.

In a preferred arrangement of the at least one female coupling element and the at least one male coupling element, said elements are provided at the free end of the second connecting part of a connecting component spaced apart following the curvature of a circle to allow mating coupling elements facing each other to also engage or disengage during turning about their centre axis of at least one of the first connecting component or the other second connecting component already mounted on a pole, about to being mounted on a pole, or being dismounted from a pole. A simple turning clockwise or counter-clockwise of any of the at least one connecting component or the other connecting component ensures that the male coupling elements does not break off said connecting components. Thus the connecting components can be reused over and over again to construct small and large structure with few and many branches, just as desired.

The at least one female coupling element may advantageously be at least one slot curving along at least one first arc of the circle, which at least one slot is dimensioned to receive and interlock with the at least one male coupling element, which may be at least one key curving along an adjacent at least one second arc of the circle. So a further advantage by arranging male coupling element(s) and female coupling element(s) on a circle is that interconnected connecting components not only can turn in relation to each other to some extent if required to obtain firm and reliable interlocking, they can also turn to. Such turning about the axis of opposite connecting components can thus easily be performed because the alternating slot and key arrangement along the circle allows the free surfaces of the opposite second connecting parts on connecting components to meet in intimate contact. A key can be fully received inside a slot and the free surfaces abut intimately resulting in a strong connection not being vulnerable to torsional stresses, as with the bridge member of prior art devices.

A slot on a connecting component may have a curved coupling opening for helping inserting the curved key of another connecting component. In one embodiment such coupling opening may extend at opposite ends into a first curved slot part and a second curved slot part, respectively. The width of the coupling opening may beneficially be larger than the width of at least one of the first curved slot part and the second curved slot part, seen in the plane constituted by the free end of the second connecting parts of the respective connecting components. Optionally the coupling opening is provided substantially in the middle of the first arc so that the first slot part and the second slot part are almost of same arc length. So in other words, the first slot part and the second slot part may be narrower than the coupling opening allowing the key on one connecting component to interlock firmly, by means of e.g. frictional or structural engagement, with any of the slot parts of the other connecting component when the aligned second connectings parts of the respective connecting components are turned either clockwise or counter-clockwise. Curved slot parts at each end of the elongated curved coupling opening of a slot in general render the interconnection of female coupling elements and male coupling elements on two interconnectable connecting components independent of turning clockwise or counter-clockwise to engage firmly. The length of the slot parts serves to ensure that the interconnected connecting components not intentionally unlock if response to rotation of the pole onto which a connecting component is mounted.

Structural engagement of a female coupling element, a slot, and a male coupling element, a key, can for example be achieved if at least a part of the slot and the key have substantially inverse or complementary fittingly shaped sectional areas when taken along a key or slot intersecting plane also extending through the centre axis of the second connecting part. Thus, the slot and the key have more or less inverse or complementary shapes. As an example, a slot can be wider at its bottom, for example L-shaped or T-shaped, or have one or more coupling breasts protruding inside the slot a distance from its free opening or at the opening. A male coupling element being L-shaped or being hook-shaped can easily engage and interlock with such a slot by passing a part of the male coupling element below the breast.

In a preferred embodiment that is particular fast and easy to assemble a second connecting part of a connecting component has two curved slots provided laterally reversed diametrically opposite each other, and two curved keys provided laterally reversed diametrically opposite each other, where slots and keys are provided alternately curving along the circle.

In one embodiment of the at least one connecting component it's first connecting part may be an annular protrusion extending coaxially with the second connecting part and dimensioned to be plugged into an end of a pole, optionally by force-fitting, to confer the pole with connecting abilities for connecting with another connecting component on another pole, e.g. also provided at the end of a pole or provided at the wall of the pole, as will be described later in relation to another embodiment of a connecting component. Due to the annular protrusion the at least one connecting component can easily be disconnected from the pole again and used on another pole if desired, but often it remains on the pole for reuse in another combination.

Cats like rough surfaces that they can shred to pieces, so often poles in cat climbing trees are carpeted in order to expose an attractive scratching and clawing surface for a cat, as well as a rugged climbing base. The carpet can e.g. a piece of a larger sisal carpet cut to size and wrapped around the pole. However the cutting edges of the piece of sisal carpet often fray and/or unlay.

To make a smooth and visual acceptable transition between the end of the pole's wall and the connecting component, a free end surface, the top surface, of the second connecting part may have a larger cross-sectional area than the cross-sectional area of the first connecting part. A skirt may extend at substantially right angle from the perimeter of the free end surface of the second connecting part substantially parallel to the centre axis of the centre axis of the connecting component to define a recess for accommodating the free end of the pole's circumferential wall, when the at least one connecting part is plugged into said free pole end. The recess constitutes a simple means for hiding and protecting the carpet's cutting edges and prevents fraying and/or unlaying, however the recess may also be beneficial for poles not being carpeted to close and cover the end of the pole.

To further ensure that a connecting component is secured properly to an end of a pole, a pole may have at least one threaded rod secured to the pole in advance, or the at least one threaded rod may be adapted to be secured to the pole, - or to the connecting component -, later. When mounted on the pole the threaded rod protrudes parallel or coaxially with the longitudinal centre axis of the pole to allow a selected connecting component, e.g. the at least one connecting component, that has at least one through-going threaded hole, to be fastened to the pole by means of the threaded rod. In this embodiment force-fitting engagement between pole and connecting component can be further reinforced by simple screwing the connecting component's threaded through-going hole on the threaded rod, or vice versa.

The above-described at least one embodiment of a connecting component is suited for making simple scratching posts of various heights. But a larger climbing tree must have branches. Branches can be made by using a second embodiment of a connecting component according to the present invention. The first connecting part may be a shell element, preferably an oblong shell element, defining a furrow with an interior radius of curvature corresponding substantially to the exterior radius of a pole to be accommodated in the cavity defined by the furrow of the shell element. When the shell element is mounted on the pole the longitudinal axis of said shell element is arranged substantially parallel to the pole's centre axis so that the wall of the pole rests on the interior surface of said shell element. Accordingly, the shell element's interior surface curves inwards to define a contact face and cavity for the pole. The shell element thus surrounds at least some of the poles circumference, e.g. third or half the circumference. In case the shell element is oblong the abutment area between pole and shell element is large and confer a high degree of structural stability to the assembly of poles and connecting components.

Preferably the radius of the furrow of the shell element may be aligned with, coaxial with or intersect the centre axis of the second connecting part, allowing the shell element to protrude from the second connecting part, the shell element, so that the cavity opens opposite the free face with the male coupling elements and female coupling elements of the second connecting part of the second embodiment of a connecting component. In this second embodiment of a connecting component the shell element and the second connecting part may preferably be made integral with each other, e.g. during moulding, or be two separate units that are connectable to each, e.g. due to being configured with similar arrangements of male coupling elements and female coupling elements as described previously.

The cavity of the furrow follows a plane that is parallel to the free face of the second connecting part. The radius of the furrow of the shell element may preferably be coaxial with or aligned with the centre axis of the second connecting part, in order to make substantially right angle branches on the climbing tree. Preferably the second connecting part is provided on the shell element so that equally sized shell element ends not are covered by the second connecting part. However, for some climbing trees and rooms it could be beneficial to be able to make branches at other angles than right. This can be obtained if the radius of the furrow of the shell element intersects the centre axis of the second connecting part to make odd angular arrangement of branches, e.g. oblique or obtuse angles.

The shell element may need to be further secured to the pole in order not to slide along the length of the pole. Suitable first securing means include straps, loops, ribbons or locking rings that preferably are detachable from the shell element but in the alternative can be integral with the shell element. To ensure that the first securing means are affixed correct to the shell element, the shell element may have second securing means, preferably on the exterior side with the second connecting part, for nesting or attaching the first securing means. As examples of second securing means can be mentioned guide grooves for nesting straps, loops, ribbons or locking rings; or in the alternative straps, loops, ribbons or locking rings can be passed through second securing means in form of hooks or eyes provided on the shell element.

The interior surface of the shell element may have a plurality of protruding elements for engaging a length of a pole and enhance friction to further ensure that the shell element, and thus also the second embodiment of a connecting component, does not slide on the pole once mounted. Preferably the protruding elements are selected from the group comprising a rough surface, barbs, tacks or pins, which all work extremely well and give a good grip on the wall of the pole, in particular on carpeted wall surfaces.

Some climbing trees need some kind of socket or base to rest firmly on a surface. To that purpose a third embodiment of the at least one connecting component may be configured with a first connecting part in form of an annular socket with an abutment surface with an area that is larger than the free surface of the second connecting part. Preferably the abutment surface is substantially flat. Further, it is preferred that the annular socket has screw holes for fastening the second embodiment of the connecting component to a base, such as the floor or a wall.

In a fourth embodiment of a connecting component according to the present invention the first connecting part is a yoke, wherein two spaced apart yoke parts extends into free ends with holes for mounting a cross-piece configured to obtain a cardan joint. By using a cardan joint consisting of two connecting components according to the fourth embodiment, which are mutually pivotable and rotatable connected through the cross-piece, any other component connected to the climbing tree via the cardan joint is also made able to turn and pivot in any plane and direction. Such a component is made able to pivot rotate even when out of alignment.

Because all of the above-described embodiment of connecting components all have same kind of second connecting parts multiple and versatile combinations and connecting assemblies can be made. If e.g. poles needs to be connected end-to-end the other connecting component may simply be of similar kind as the at least one connecting component. A long scratching post can easily be assembled from many smaller length of poles by using the first embodiment of a connecting component. If branches are needed the other connecting component may be of different kind than the at least one connecting component. Typically the other connecting component is the second embodiment and the at least one connecting component is the first embodiment. It is also possible to mount the annular socket of the third embodiment of a connecting component according to the invention at the ceiling, the floor or a wall and subsequently coupling the annular socket together with a cardan joint composed of two connecting components according to the fourth embodiment, e.g to suspend accessories such as toys. Assembling possibilities are almost unlimited.

The above connecting components render it possible to build stable, sturdy and spaced lattices structures for any imaginable use. In case of a cat climbing tree cats can climb up and come down without slipping or falling. Accessories and items, such at tunnels, cat houses, shelves or trays can be mounted by e.g. fasting the annular socket of the third embodiment to the item, and suddenly such an item can easily be snapped together with another connecting component. In case the items shall be repositioned it is simply disconnected and moved to a new position.

The invention also relates to a method of assembling a climbing tree comprising at least a plurality of poles and connecting components configured for connecting the poles or for connecting poles and accessories, wherein
- at least one connecting component of the kind as defined above is connected to a first pole, accessory or surface,
- another connecting component of the kind as defined above is connected to a second pole, accessory or surface, and
- the at least one male coupling element and the at least one female coupling element on the second connecting part of the at least one connecting component are engaged to interlock with the at least one female coupling element and at least one male coupling element on the other second connecting part of the other connecting component.

The at least one connecting component and the at least one other connecting component can advantageously be further engaged to interlock by rotating any of the associated first pole and second pole, or the respective connecting elements, clockwise or counter-clockwise.

The invention will be described in further details below with reference to the accompanying drawing describing by way of examples, various embodiments of connecting components according to the invention in various combinations and arrangements.
fig. 1 is a perspective view of a first embodiment of a connecting component seen oblique from the free end's top surface,
fig. 2 shows the same seen from the top surface,
fig. 3 shows the same seen from the side,
fig. 4 shows the same seen from the first connecting part,
fig. 5 is a perspective view of a second embodiment of a connecting component seen oblique from the free end and the top surface of the second connecting part,
fig. 6 is a plane view of the same seen from the side of the second connecting part,
fig. 7 shows the same seen from the long side,
fig. 8 shows the same seen from the short side and arranged on a fragment of a pole,
fig. 9 is a plane view of the same seen from the side of the first connecting part,
fig. 10 is a perspective view of a third embodiment of a connecting component seen oblique from the top surface of the second connecting part,
fig. 11 is a plane view of the same seen from the top surface,
fig. 12 shows the same seen from the side,
fig. 13 is a perspective view of a fourth embodiment of a connecting component seen oblique from the yoke of the first connecting part,
fig. 14 is a plane view seen from the second connecting part,
fig. 15 shows the same seen from the side of the yoke of the first connecting part,
fig. 16 shows the same seen from another side between the yoke parts of the yoke of the first connecting part,
fig. 17 is a perspective view of a cardan joint consisting of two connecting components according to the fourth embodiment and a cross-piece,
fig. 18 shows the cardan joint shown in fig. 18 seen from the side,
fig. 19 shows, seen from the side, a ring-shaped cross-piece for the cardan joint shown in figs. 17 and 18,
fig. 20 is plane view of the ring-shaped cross-piece shown in fig. 19 to make the cardan joint shown in figs. 17 and 18,
fig. 21 is a perspective view of a locking ring for securing the second embodiment of a connecting component to a length of a pole without screws,
fig. 22 shows the same seen from the front,
fig. 23 shows the same seen in use for mounting the second embodiment of a connecting component to a pole,
fig. 24 is a perspective view, seen oblique from the front, of a modified second embodiment of a connecting component according to the present invention for mounting accessories to a length of a pole,
fig. 25 shows the same seen from the short end of the first connecting part,
fig. 26 is a perspective enlarged scale view, seen oblique from the top, of a nut with internal and external threads for mounting and demounting accessories to the modified second embodiment of a connecting component shown in figs. 24 and 25,
fig. 27 is a perspective enlarged scale view, seen oblique from the top, of a tool for screwing the nut shown in fig. 26 on and off, and
fig. 28 shows, seen in perspective, a pole with the first embodiment of a connecting element mounted at opposite ends.

The invention according to the appended claims is illustrated below by way of an exemplary selection of connecting components sharing the common feature of having both male coupling elements and female coupling elements. Although the connecting components are shown with two male coupling elements and two female coupling elements other feasible numbers of coupling elements are included within the scope of the present invention, such as just one male coupling element and one female coupling element. The outline and dimensions of the various connecting components may deviate from the outline and dimensions shown in the drawing. The outlines and dimension shown in the drawing should not be construed at limiting the scope of the present invention, rather to be taken as preferred designs that can be made in any suitable sizes.

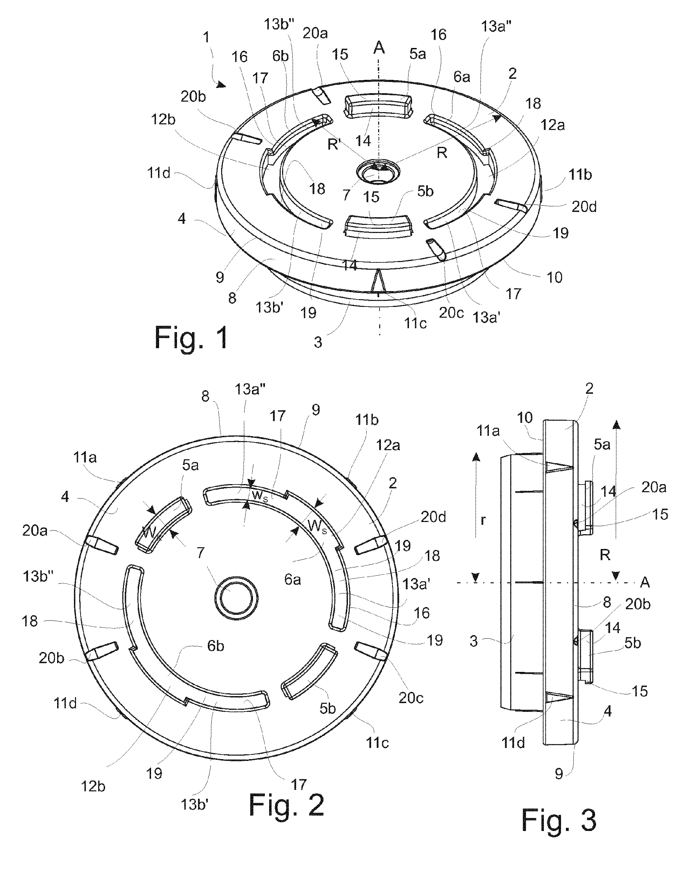

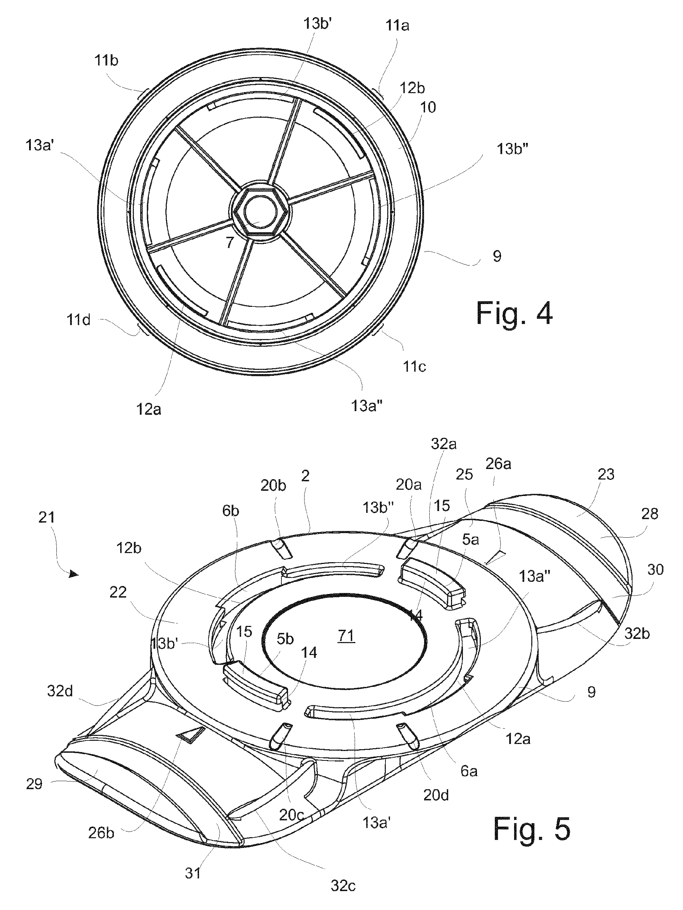

Fig. 1 is a perspective view of a first embodiment of a connecting component 1 seen oblique from it's top surface 2. Fig. 2 shows this first embodiment 1 from the top surface 2 of the second connecting part, fig. 3 shows this first embodiment 1 from the side, and fig. 4 shows this first embodiment 1 from the pole contacting side of the first connecting part.

The first embodiment of a connecting component 1 has a first connecting part 3 configured for fastening to a pole (not shown) or a surface (not shown) and an opposite second connecting part 4 including the flat top surface 2, and two male coupling elements 5a,5b opposite each other, in alternating arrangement with two female coupling elements 6a,6b along a circle on the flat top surface 2. The male coupling elements 5a,5b are dimensioned for engaging and locking with the mating female coupling elements 6a,6b of another connecting component selected from the selection of connecting components according to the present invention.

The first connecting part 3 and the second connecting part 4 are mainly shaped as cylindrical disks, which are sized so that the second connecting part 4 has a larger radius R than the radius r of the first connecting part 3 to allow the first connecting part 3 to be plugged into an end opening of a pole (not shown), and the second connecting part 4 to span an exterior diameter of an associated pole to thereby serve as an end-fitting closure of said pole, e.g. to prevent unravelling of a carpet structure that surrounds the exterior of the pole. As seen best in fig. 3 the first connecting part 3 and the second connecting part 4 extend in elongating of each other, aligned concentrically along centre axis A so that the first connecting part 3 protrudes from the second connecting part 4 opposite the second connecting part top surface 2. A through-going hole 7 is located along the centre axis A. For example a threaded rod on a centre axis of a pole can be passed through through-going holes 7 of opposite interconnected connecting components to further ensure firm interconnection, and confer rigidity and stability to the thus obtained assembly connection.

A skirt 8 extends at substantially right angle from the perimeter 9 of the free end surface, the top surface 2, of the second connecting part 4 substantially parallel to the centre axis A of the connecting component 1, to delimit a recess 10, as seen in fig. 4, for accommodating the free end of the pole's circumferential wall when the first connecting part 3 is plugged into said end.

Besides from the male coupling elements 5a,5b the top surface 2 on the first embodiment of a connecting component 1 is substantially flat, and when two connecting components are interconnected, e.g. if two connecting components 1 according to the first embodiment are used for end-to-end connecting two poles, the male coupling elements 5a,5b are accommodated inside the female coupling elements 6a,6b so that the opposite top surfaces 2 of the connecting components abut intimately.

Visual sight of male coupling elements 5a,5b approaching female coupling elements 6a,6b for interconnection of two connecting components becomes lessen the closer the respective opposite connecting components get to each other. To facilitate interconnection of two opposite second connecting parts 4 of connecting components 1, the opposite connection components 1 have alignment means 11 to more easily align the two opposite connecting components 1 correct for engagement. In the present embodiment the alignment means 11 are four small arrows 11a, 11b, 11c, 11d provided at the skirt 8 where they are visual during the entire interconnection procedure. The arrows 11a, 11b, 11c, 11d are made slightly elevated from the remainder of the skirt 8 but this is not mandatory. The alignment means can 11 be of any suitable kind, including but not limited to embossed structures, imprints, or indents.

The female coupling elements 6a,6b are slots 6a,6b arranged and curving along a first arc of a circle having a radius R' smaller than the radius R of the top surface 2 of the second connecting part 4. The first slot 6a is located opposite the second slot 6b, which is arranged as a mirror image of the first slot 6a. A first key 5a is located opposite a second key 5b, which is arranged as a mirror image of the first key 5a. The keys 5a,5b are provided along the same circle as the slots 6a,6b along a respective second arc following a first arc, so that slots 6a,6b and keys 5a,5b alternate.

Each slot 6a,6b has a curved coupling opening 12a,12b for facilitated insertion of a male coupling element 5a, 5" in the present case first curved key 5a and second curved key 6b. The coupling openings 12a,12b extend at opposite ends into a first curved slot part 13a';13b', respectively, and a second curved slot part 13a";13b", respectively.

As seen best in fig. 2 the width W_{c} of a coupling opening 12a,12b is larger than the width wₛ of both a first curved slot part 13a';13b' and a second curved slot part 13a";13b". The width Wₖ of a key 5a,5b corresponds substantially to the width W_{c} of a coupling opening 12a,12b, although it could be slightly smaller to make insertion into a coupling opening 12a,12b easier, or it may be slightly larger for force-fitting into a coupling opening 12a,12b. Once the male coupling elements 5a,5b, the keys, of one connecting component 1 are located inside the coupling openings 12a,12b of the female coupling elements 6a,6b, the slots, of another connecting component of similar or different kind, the two connecting components cab be rotated in relation to each other either clockwise or counter-clockwise about their coaxially aligned centre axes A, now a common axis A. Thereby the keys on opposite connecting components are rotated inside respective first curved slot parts or second curved slot parts of the opposite connecting components slots. Because the width of a key is larger than the width of a curved slot part the key is locked firmly inside a respective slot part. A strong and reliable connection of two connection elements, and thus of two poles equipped with such connecting components, can be obtained.

In the first embodiment of a connecting component 1 the coupling openings 12a,12b are provided in the middle of the first arc, however this is not mandatory. The first slot parts 13a', 13b' and the second slot parts 13a", 13b" need not have same arc length.

A hook-shaped or L-shaped embodiment of keys 5a,5b is seen best in fig. 3. A first hook part 14 is anchored at the top surface 2 of the second connecting part 4 at substantially right angle to said top surface 2, i.e. parallel to the centre axis A, and extends into a second hook part 15 that extends substantially parallel to said top surface 2 of the second connecting part 4. The cross-section of a mating slot 6a,6b taken in a plane including the centre axis A may be complementarily L-shaped or T-shaped, to accommodate and engage with the second hook part 15. The depth of a slot 6a,6b and the height of a key 5a,5b are adapted to each other so that the respective contacting top surfaces 2 of interconnected connecting components abut intimately. When two connecting components are interconnected the second hook part 15 is firmly engaged and locked inside a curved slot part 13a'13b',13a",13b" below a suitable provided protrusion or breast 16 overhanging the cavity 17 of at least the curved slot parts 13a',13a";13b",13b". So, as seen in fig. 1 a curved slot part 13a',13a";13b",13b" is wider at it's bottom 18 than at it's opening 19. The second hook part 15 constitutes a breast that can be fitted, e.g. snap-fitted, below the protrusion 16 of the slot.

The top surface 2 of the second connecting component 4 has four indentations 20a,20b,20c,20d that serve to receive a detachable locking wedge or locking pin (not shown) in order to provide a further means to avoid that two interconnected connecting components unintentionally rotates about their centre axis, and accidentally disconnect, e.g. if subjected to permanent, brief, occasional, or unexpected loads. The indentations 20a,20b,20c,20d are short grooves that opens into the circumference of the skirt 8 of the second connecting part 4 and end a short distance before the circle of male and female coupling elements. Once the two connecting components are interconnected the indentations 20a,20b,20c,20d becomes holes for insertion of an appropriate locking wedge or locking pin.

Fig. 5 - 9 shows a second embodiment of a connecting component 21 according to the present invention.

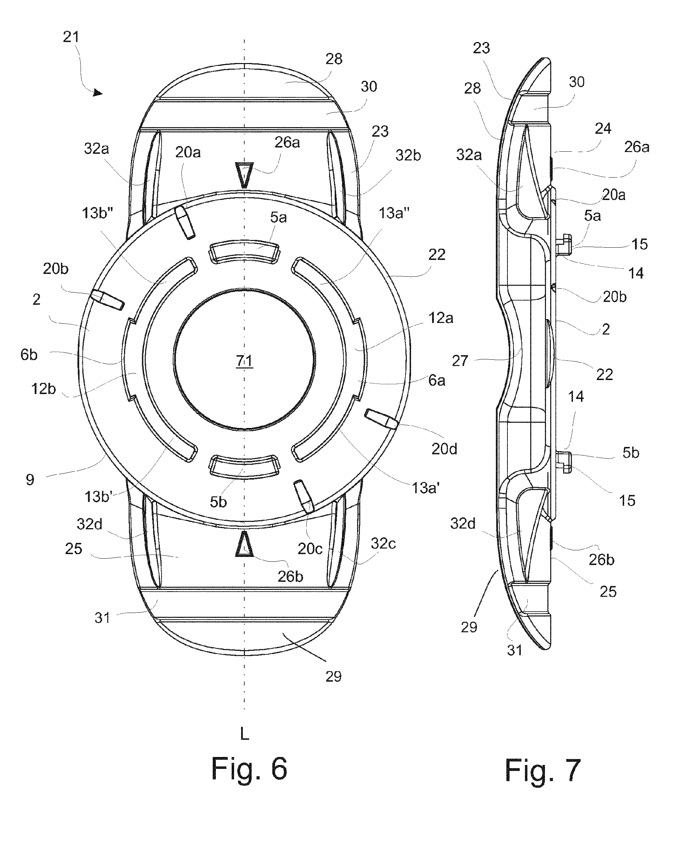

The second embodiment of a connecting component 21 differs mainly from the first embodiment of a connecting component 1 in the design of the first connecting part. As seen in the plane view of fig. 6 and the side view of fig. 7 the second connecting part 22 features the same kind of, and similarly equipped, top surface 2, including same kind of male coupling elements 5a,5b, female coupling elements 6a,6b provided at same radii as for the first embodiment, as well as same kind of indentations 20a,20b,20c,20d to allow the second embodiment of a connecting component 21 to interconnect firmly with the first embodiment of a connecting component 1. So for like parts same reference numerals are used and reference is made to the description of figs. 1 - 3 for detailed explanation of structural and functional features of common parts.

As is clear from the perspective view seen in fig. 5 of the second embodiment of a connecting component 21 the second connecting part 22 has no skirt 8. A skirt 8 is not needed and would be in the way, simply because the second embodiment of a connecting component 21 is designated for being mounted to a length of a pole wall instead of being mounted to an end of a pole. To that aspect the first connecting part 23 is an oblong curved shell element 23 that extends through a plane substantially parallel to the top surface 2 of the second connecting part 22.

The shell element 23 has an interior surface 24 defined by a furrow intended for engaging and partly surrounding the pole along the length of the pole and an exterior surface 25 from which the second connecting part 22 protrudes. Alignment means 26a,26b in form of two slightly elevated arrows 26a,26b, are, in the absence of a skirt 8, provided opposite each other on the exterior surface 25 along the longitudinal centre axis L of the shell element 23 adjacent the perimeter 9 of the second connecting part 22, in order to appear visual during interconnection with e.g. a first embodiment of a connecting component 1.

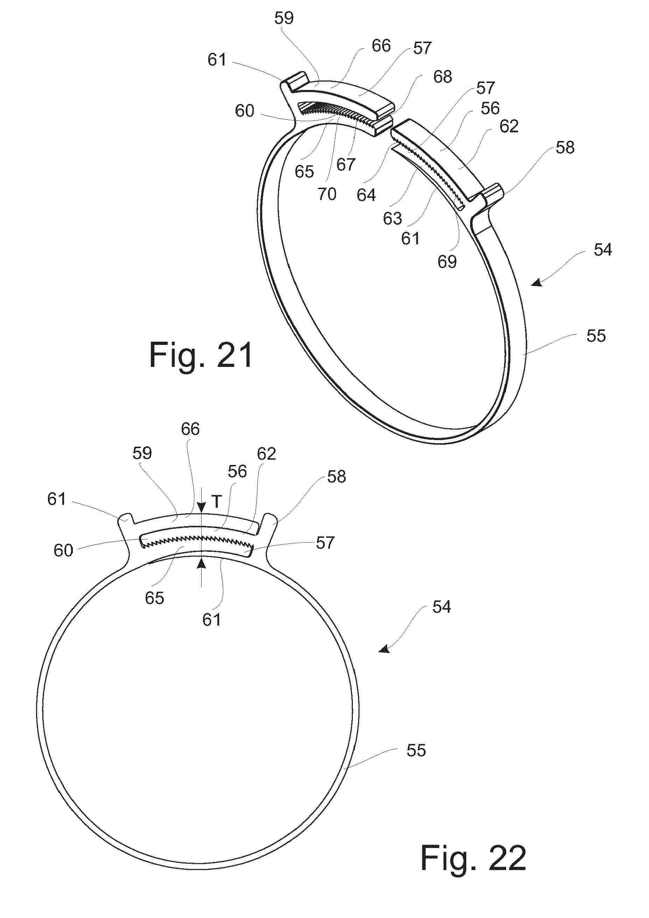

The oblong curved shell element 23 is integral with a centre shell part 27 located immediate below the second connecting part 22. The centre shell part 27 extends into opposite elongated first shell end part 28 and second shell end part 29 thereby providing an interior surface 24 large enough for ensuring reliable abutment and engagement to the pole. On the exterior surface 25 of the shell element 23 the first shell end part 28 has a first guide groove 30 and the second shell end part 29 has a second guide groove 31 for nesting a means for securing the second embodiment of a connecting component 21 to a pole, for example securing means like straps, loops, ribbons or the locking ring shown in figs. 21 and 22. Two reinforcement ribs 32a,32b unite the second connecting part 22 with the first shell end part 28 lengthwise, and two reinforcement ribs 32c,32d unite the second connecting part 22 with the second shell end part 29 lengthwise. Reinforcement ribs are not mandatory however when provided they may also serve as a convenient finger grips during mounting a second embodiment of a connecting component 21 on a pole 34.

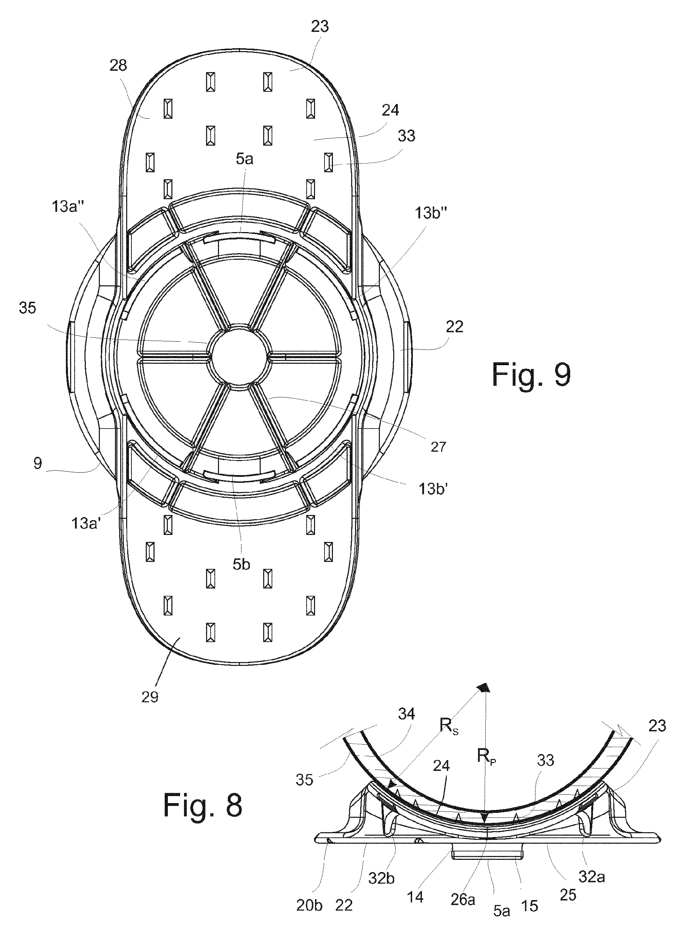

As shown in the view from the short end seen in fig. 8 and in the view from the furrows interior surface 24 seen in fig. 9 the interior surface 24 of the shell element 23 preferably has a plurality of protruding elements 33. In fig. 8 a sectional fragment of a pole 34 is illustrated. The protruding elements 33 are barbs that engages the pole 34's wall 35, however any frictional or uneven structure able of grasping said pole 34's wall 35 will do. The radius of curvature R_{S} of the shell element 23 corresponds substantially to the exterior radius R_{P} of the pole 34 so that a perfect fit to the pole 34 can be obtained.

The connection elements are preferably made in a plastic moulding process using plastic materials able to cure to dimensionally stable and robust structures. For the benefit of the environment, efforts are continuously made to save raw plastic material and produce lightweight reusable components. To that aspect the interior surface 24 of the centre shell part 27 may have a pattern of moulding ribs 35 that also might serve to reinforce the entire structure of the connecting components 1;21. In the present case the pattern of moulding ribs is presented as a circle wherefrom the ribs radiate but any other pattern suited for saving raw material without compromising the integrity and structural requirements of the connecting components can be used.

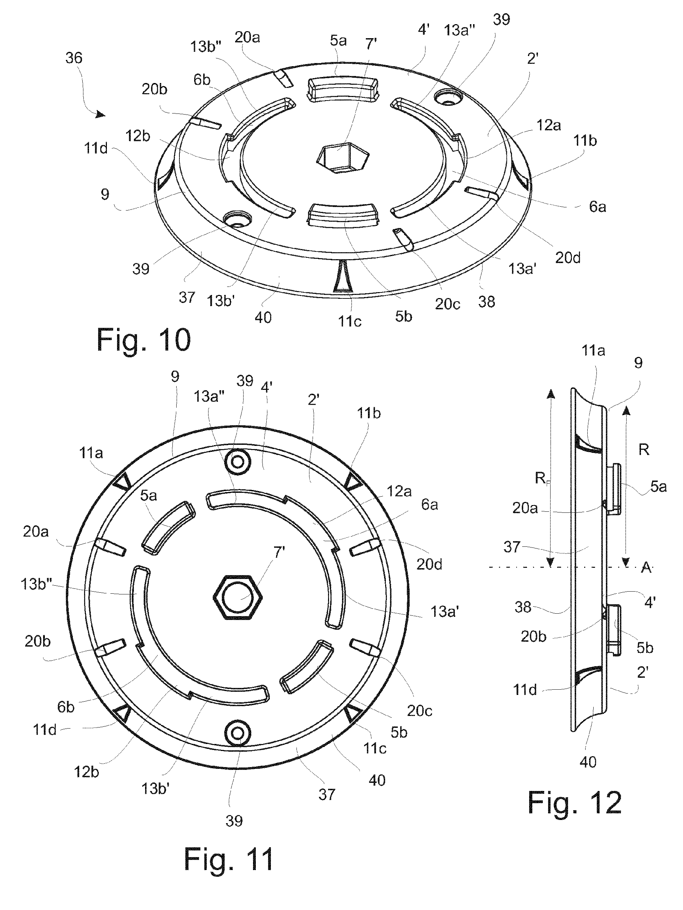

Fig. 10 is a perspective view of a third embodiment of a connecting component 36 seen oblique from it's free end face, the top surface 2'. Fig. 11 is a plane view of this third embodiment 36 from the top surface 2' and fig. 12 shows this first embodiment 36 from the side. The third embodiment of a connecting component 36 is intended for mounting on a wall, a floor or a ceiling, or any other flat subjacent surface to which a pole, a scratching post or a climbing tree equipped with connecting component(s), or a climbing tree build of poles and connecting components according to the invention, are secured. For like parts same reference numerals are used and for interconnection and detailed explanation of structural and functional features of common parts reference is made to the description of figs. 1 - 9.

The third embodiment of a connecting component 36 differs mainly from the first embodiment of a connecting component 1 and the second embodiment 21 in that the first connecting part 37 has a flat contact surface 38 of larger radius R_{F} than the radius R of the top surface 2' of the second connecting part 4'. In use the flat contact surface 38 are arranged to rest on a subjacent mounting surface (not shown), e.g. the floor. Screw holes 39 extend through both the second connecting part 4' and the first connecting part 37 of the third embodiment of a connecting component 36 close to the perimeter 9 of the second connecting part 4', and serves for fastening said third embodiment of a connecting component 36 to the selected subjacent mounting surface (not shown). The second connecting part 4' further features the same kind of, and similarly equipped, top surface 2', including same kind of male coupling elements 5a,5b and female coupling elements 6a,6b provided at same radii as for the first embodiment, as well as same kind of indentations 20a,20b,20c,20d to allow the third embodiment of a connecting component 36 to interconnect firmly with the first embodiment of a connecting component 1 or the second embodiment of a connecting component 21. Flared transition part 40 makes the second connecting part 4' and the first connecting part 37 an integral unit. The third embodiment of the connecting component 36 constitutes a flat socket element 36. Alignment means 11 in form of four small arrows 11a,11b,11c,11d are provided at the transition wall 40 and a through-going centre hole 7' concentric about the centre axis A serves to secure a rod from a pole or a rod secured to the surface whereto the third embodiment of a connecting components is fastened. The centre hole 7' is designed to receive rods having either hexagonal cross-section or cylindrical cross-section, or a lock nut having hexagonal cross-section. Other cross-sections can be quite as useful. For example the cross-sections incorporated in the first embodiment for a connecting component 1 and the third embodiment for a connecting component 21 are mutually exchangeable.

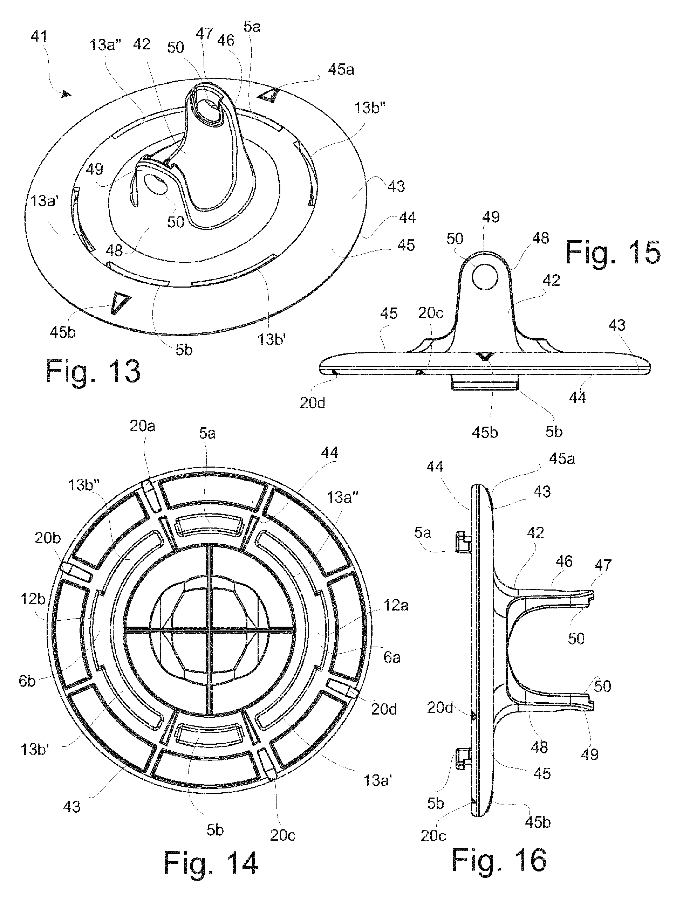

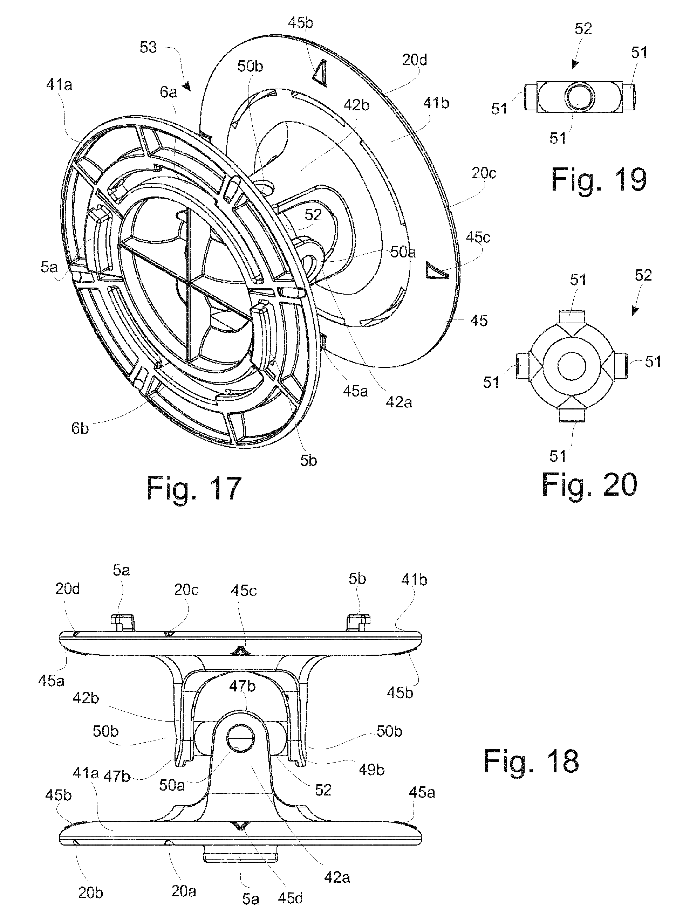

Fig. 13 is a perspective view, seen oblique from above, of a fourth embodiment of a connecting component 41 according to the invention for assembling a cardan joint, as shown in figs. 17 and 18.

The fourth embodiment of a connecting component 41 differs mainly from the first, second and third embodiment of a connecting component 1;21;36 in that the first connecting part 42 has or is a yoke 42. As seen best in fig. 14, which is a view seen from the top surface 44 of the second connecting part 43, the fourth embodiment of a connecting component 41 has the same kind of previously described male coupling elements 5a,5b and female coupling elements 6a,6b provided at same radii as for the first, second and third embodiment of connecting components 1;21;36. So, the fourth embodiment of a connecting component 41 is similarly configured for interconnecting with any of the previously described embodiments of connecting components 1;21;36. The fourth embodiment of a connecting component 41 also has indentations 20a,20b,20c,20d to firmly lock it together with another different kind or same kind of connecting component 1;21;36;41, as previously described by inserting a wedge or pin (not shown) in the hole made between an indentations 20a,20b,20c,20d and a top surface 44 once two selected connecting components 1;21;36;41 are interconnected by virtue of their respective male coupling elements 5a,5b and female coupling elements 6a,6b and rotated appropriately. For like parts same reference numerals are used. Furthermore, reference is made to the description of the previous figures for detailed explanation of structural and functional features of common parts.

As also seen in the two different side views of figs. 15 and 16, the yoke 42 projects from the free side 45 of the second connecting part 43 opposite the top surface 44 with the male coupling elements 5a,5b and the female coupling elements 6a,6b. Alignment means in form of arrows 45a,45b are provide on the free side 45. A first yoke part 46 with a first free yoke end 47 and a second yoke part 48 with a second free yoke end 49 define the yoke 42 in form of a bifurcated forge 42 projecting substantially perpendicular from the free side 45 of the second connecting part 43. Both free yoke parts 46,48 have holes or seats 50 arranged facing each other for receiving one of the protruding swivel pins 51 of the ring-shaped cross-piece 52 shown in figs. 19 and 20 to obtain a swivel connection for a cardan joint.

The cardan joint 53 consists, as shown in fig. 17 and 18, of two connecting components 41a,41b according to the fourth embodiment and as shown in figs. 13-16. The free side 45 of each connecting component 41a,41b has alignment means 45a,45b,45c,45d. The yokes 42a,42b of the two connecting components 41a,41b are angular offset from each other by about 90° when connected to each other by means of the ring-shaped cross-piece 52 seen in figs. 19 and 20, inserted in respective holes 50a and 50b. Emphasis is made that other shapes of the cross-piece 52 than ring-shaped can be used, for example a solid disk element, a polygon or a spider. The function of cardan joint are known to the person skilled in the art and will not be discussed any further.

An exemplary locking ring 54 is seen in figs. 21 and 22. The locking ring 54 consists of a main body in form of a substantially ring-shaped band or hoop 55. The ring-shaped band 55 has a first free end 56 with a first clamping mouth 57 and a first finger grip 58, and the opposite second free end 59 has a second clamping mouth 60 and a second finger grip 61. The first clamping mouth 57 and the second clamping mouth 60 are elongated, and curve with the ring-shaped band 55 and are configured for interlocking. The first clamping mouth 57 consists of a first lower jaw 61, with a first face that in use faces the pole and a smooth opposite gap face, and a first upper jaw 62, which in use faces away from the pole. The first lower jaw 61 and the first upper jaw 62 delimit a first gap 63 with a first gap opening 64. The second clamping mouth 60 consists of a second lower jaw 65, which in use faces towards the pole, and a second upper jaw 66, which in use faces away from the pole. The second lower jaw 65 and the second upper jaw 66 delimit a second gap 67 with a second gap opening 68. In the present embodiment of a locking ring 54 the first upper jaw 62 has first coupling teeth 69 and the second lower jaw 65 has second coupling teeth 70 which mates to interlock with each other when the first upper jaw 62 is pushed inside the second gap 67, as seen best in fig. 22. The diameter of the so obtained locked ring can be further reduced by pressing and forcing the first finger grip 58 and the second finger grip 61 towards each other. Minimum diameter is obtained when a jaw 62;66 reaches the bottom of a gap 67;63, respectively. The first lower jaw 61 expediently tapers towards the first gap opening 64. Also, the second lower jaw 65 can taper towards the second gap opening 68, so that when the first clamping mouth 57 and the second clamping mouth 60 are coupled together and their respective first teeth 69 and second teeth 70 engage to firmly interlock, their combined thickness T is substantially the same along the combined arc, so that the ring-shaped band appear as a circle with uniform interior radius, that fit around the exterior radius of the pole.

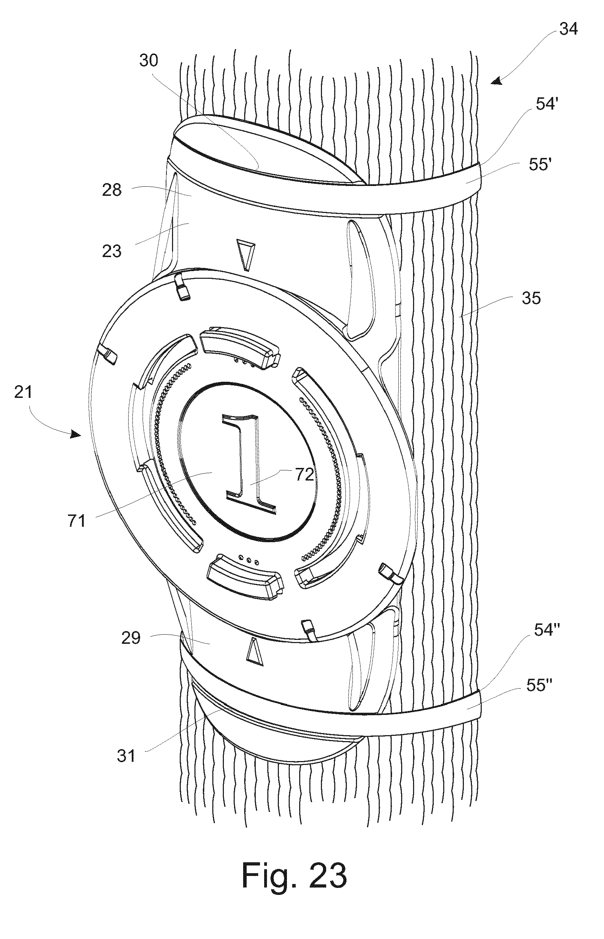

Fig. 23 illustrates how bands 55 of locking rings 54 are used to mount the second embodiment of a connecting component 21 on a pole 34. For sake of clarity only reference numbers for new details are shown in fig. 23. The shell element 23 is located in contact with the wall 35 of the pole 34. Then the band 55' of a first locking ring 54' is located and nested in the first guide groove 30 of the first shell end part 28 and the band 55" of a second locking ring 54" located in a second guide groove 31 of the second shell end part 29. Then the clamping mouth of the locking rings is locked to engage on the opposite side of the pole (not seen in fig. 23) as described above. In order to replace or move the second embodiment of a connecting component 21 from the pole 34 the locking ring bands 55',55" can simply be disengaged again. A centre area 71 of the second connecting part 21 can be used to present information, e.g. assembling instructions or advertising notes. In the present case part of the applicant logo 72 is presented, the logo including the figurative number 1.

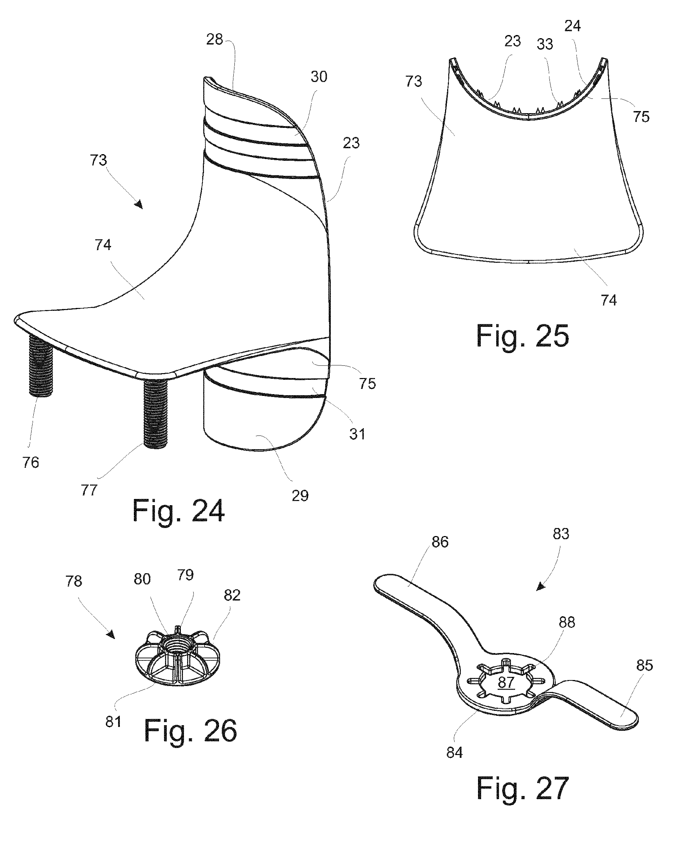

Fig. 24 is a perspective view, seen oblique from the front, of a modified second embodiment of a connecting component 73 according to the present invention for mounting accessories to a length of a pole. The modified second embodiment of a connecting component 73 have features common with the second embodiment of a connecting component 21. In particular a shell element 23 with an interior surface 24 with protruding elements 33 in form of barbs for engaging the pole wall, as seen in fig. 25, where the modified second embodiment of a connecting component 73 is seen from a short end. A platform 74 extends as a duck's bill at an angle, preferably about 90°, from the exterior surface 75 of the shell element 23, which exterior surface 75 also have one or more first guide grooves 30 at first shell end part 28 and one or more second guide grooves 31 at the second shell end part 29 in order for the modified second embodiment of a connecting component 73 to be mounted on a pole in a manner similar to the T-shaped the second embodiment of a connecting component 21, as described above, by means of a suitable number of locking rings 54. Two threaded rods 76,77 or screws on one side of the platform 74 serves to add more or less heavy accessories, such as houses, beds, other platforms or toys to a climbing tree or a climbing post. Although the modified second embodiment of a connecting component 73 is shown with the threaded rods 76,77 facing downwards in fig. 24 this should not be construed as limiting the scope of the invention. Just as with the second embodiment of a connecting component 21 there are no up and down. The assembling person can arrange the connecting elements 21;73 with any end up, including so that the threaded rods 76,77 turns upwards. Due to the elongated shell element 23's large contact face 24 with the pole 34 wall 35 the platform 74 of the modified second embodiment of a connecting component 73 is able to carry even heavy loads without the position of shell element 23 on the pole 34 is affected negatively and results in the shell element 23 gets loose, displaces or breaks.

Figs. 26 is a perspective view of a convenient nut 78 for screwing onto threaded rods 76,77 when a piece of accessory (not shown) is mounted. Any conventional nut can be used instead, provided it fits the rods 76,77.

Thee advantages of the present nut 78 consist in particular in the fact that in addition to having a nut hole 79 with an internal thread 80, the nut 78 also has an external dome-shaped side 80 that, in use on threaded rods 76,77 of the modified second embodiment of a connecting component 73, faces away from the platform 74, while the opposite side 81 is substantially flat to allow the nut 78 to be screwed into abutment with the platform 74. The dome-shaped external side 80 has a plurality of spaced apart coupling fins 82 radiating from the nut hole 79. The tool 83 shown in fig. 27 is specially designed for engaging the coupling fins 82.

The tool 83 consists of a main body 84 wherefrom opposite handle parts 85, 86 extend. The main body 83 has an opening 87 wherefrom incisions 88 radiate as sunbeams 88 from the sun to accommodate respective coupling fins 82 of the nut 78. Once the coupling fins 82 are located inside the incisions 88 the tool 83 can be turned bringing the nut 78 along, to loosen or fasten the nut 78 on a threaded rod 76,77. The tool 83 is particular expedient because visual sight when mounting accessories often is low, e.g. if mounting and screwing needs to be done from inside e.g. a cathouse.

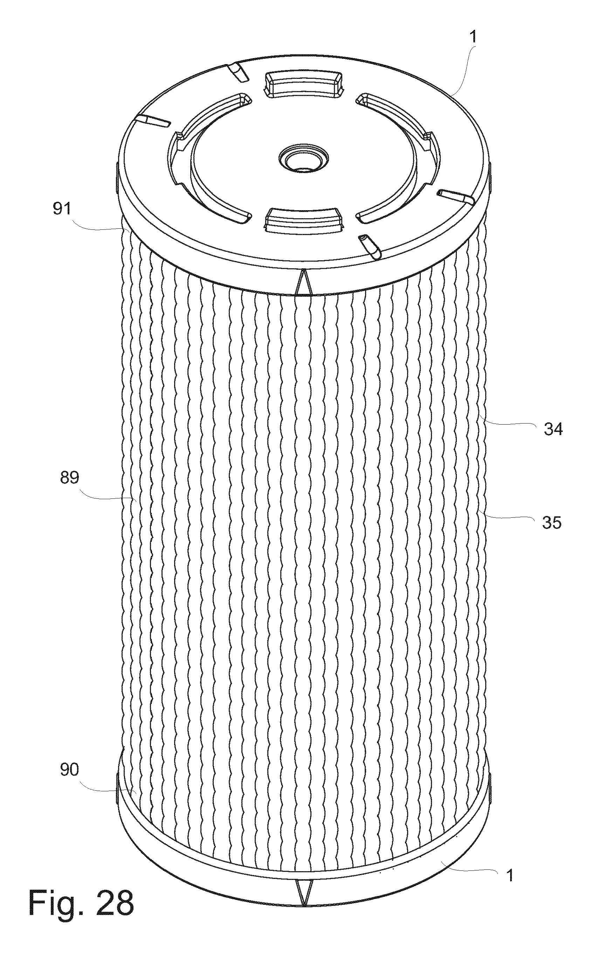

Fig. 28 is a perspective view of a pole 34 with a wall 35 provided with a sisal carpet 89. At opposite ends 90;91 of the pole 34 two first embodiments of connecting components 1 are plugged in by means of their first connecting parts 3. For a description of the structure and design references are made to figs. 1-4. Due to the annular recess 10 the sisal carpet 89 cannot become frayed and the outer appearance of pole 34's and connecting component 1's for a climbing tree according to the present invention is both pleasant and attractive for both humans and animals. A similar connecting component 1 or the second 21, third 36 or fourth 41 embodiment of connecting components on another pole 34 or surface are then just snap-fitted into the respective female coupling elements 6a,6b/male coupling elements 5a,5b, where-after one of the objects with connecting components is rotated, and optionally a wedge or pin is inserted in the hole created by the indentations of contacting connecting elements.

By means of the modular climbing tree according to the present invention simple climbing trees and complex climbing trees having many branches and accessories can be assembled and erected fast and easy, as well as dissembled once desired. The freedom to combine poles with different connecting components offers almost unlimited possibilities of designing exactly the climbing tree suited and dimensioned for a purpose, room and/or an animal.

## Claims

1. A modular climbing tree comprising at least a plurality of poles (34) and connecting components (1;21;36;41) configured for connecting the poles (34) or for connecting poles (40) and accessories, **characterised in that** the connecting components (1;21;36;41) comprises at least one connecting component (1;21;36;41) that has a first connecting part (3;23;37;42) configured for fastening to a pole (34) or a surface and an opposite second connecting part (4;22;4';43) having at least one male coupling element (5a,5b) and at least one female coupling element (6a,6b) for engaging and locking with mating coupling elements (6a,6b;5a,5b) of another connecting component (1;21;36;41) selected from the connecting components (1;21;36;41).

2. A modular climbing tree according to claim 1, **characterised in that** the at least one female coupling element (6a,6b) and the at least one male coupling element (5a,5b) are provided at a free side (2;2';44) of the second connecting part (4;22;4';43) of a connecting component (1;21;36;41) spaced apart following the curvature of a circle.

3. A modular climbing tree according to any of claims 1 or 2, **characterised in that** the at least one female coupling element (6a,6b) is at least one slot (6a,6b) curving along at least a first arc of the circle, which at least one slot (6a,6b) is dimensioned to receive and interlock with at least one male coupling element (5a,5b) in form of at least one key (5a,5b) curving along an adjacent at least one second arc of the circle, preferably a slot (6a,6b) is longer than a key (5a,5b).

4. A modular climbing tree according to claim 3, **characterised in that** the slot (6a,6b) has a curved coupling opening (12a,12b) for inserting the curved key (5a,5b) of another connecting component, which coupling opening (12a,12b) extends at opposite ends into a first curved slot part (13a';13b') and a second curved slot part, respectively, wherein the width W_{C} of the coupling opening (12a,12b) is larger than the width W_{S} of at least one of the first curved slot part (13a';13b') and a second curved slot part (13a";13b"), optionally the coupling opening (12a,12b) is provided in the middle of the first arc.

5. A modular climbing tree according to any of the preceding claims 1 - 4, **characterised in that** the second connecting part (4;22;4';43) of a connecting component (1;21;36;41) has two curved slots (6a,6b) provided laterally reversed diametrically opposite each other, and two curved keys (5a,5b) provided laterally reversed diametrically opposite each other, where slots (6a,6b) and keys (5a,5b) are provided alternately along the circle.

6. A modular climbing tree according to any of the preceding claims 1 - 5, **characterised in that** the first connecting part (3) is an annular protrusion (3) extending coaxially with the second connecting part (4) and dimensioned to be plugged into an end (90,91) of a pole (34), optionally by force-fitting.

7. A modular climbing tree according to any of the preceding claims 1 - 6, **characterised in that** the second connecting part (4) has
- a free end surface (2) with a larger cross-sectional area than the cross-sectional area of the first connecting part (3), and
- a skirt (8) extending at substantially right angle from the perimeter (9) of the free end surface (2) of the second connecting part (4) substantially parallel to the centre axis (A) of the connecting component (1) to define a recess (10) for accommodating the free end (90,91) of the pole's (34) circumferential wall (35) when the first connecting part (3) is plugged into said end (90,91).

8. A modular climbing tree according to any of the preceding claims 1 - 5, **characterised in that** the first connecting part (23) is a shell element (23) defining a furrow with an interior radius of curvature (R_{S}) corresponding substantially to an exterior radius (R_{P}) of a pole (34) to be accommodated in the furrow of the shell element 23, optionally the shell element (23) is oblong.

9. A modular climbing tree according to claim 8, **characterised in that** the radius of curvature (R_{S}) of the furrow of the shell element (23) is aligned with, coaxial with or intersects the centre axis of the second connecting part (22), and the cavity defined by the furrow opens opposite the free end surface (2) of the second connecting part (22).

10. A modular climbing tree according to any of the claims 8 or 9, **characterised in that** the modular climbing tree comprises first securing means (54) selected from the group including straps, loops, ribbons or locking rings (54) for securing the shell element (23) to a pole (34), and optionally the shell element (23) has second securing means (30,31) for nesting or attaching the first securing means (54) in correct position.

11. A modular climbing tree according to any of the preceding claims 8, 9 or 10, **characterised in that** the interior surface (24) of the shell element (23) has a plurality of protruding elements (33) for engaging a length of the pole (34), preferably the protruding elements (33) are selected from the group comprising a rough surface, barbs, tacks or pins.

12. A modular climbing tree according to any of the preceding claims 1 - 5, **characterised in that** the at least one connecting component (36) has a first connecting part (37) in form of an annular socket (36) with an abutment surface (38) with an area that is larger than the area of the free end surface (2') of the second connecting part (4'), preferably the abutment surface (38) is substantially flat, optionally the annular socket (36) has screw holes (39).

13. A modular climbing tree according to any of the preceding claims 1 - 5, **characterised in that** the first connecting part is a yoke (42), wherein two spaced apart yoke parts (46,48) extends into free yoke ends (47,49) with holes (50) for mounting a cross-piece (52) configured to obtain a cardan joint (53).

14. A modular climbing tree according to any of the preceding claims 1 - 13, **characterised in that** the other connecting component (1;21;36;41) is of similar kind as the at least one connecting component (1;21;36;41), or the other connecting component (1;21;36;41) is different from the at least one connecting component (1;21;36;41).

15. A method of assembling a climbing tree comprising at least a plurality of poles (34) and connecting components (1;21;36;41) configured for connecting the poles (34) or for connecting poles (34) and accessories, **characterised in that**
- at least one connecting component (1;21;36;41) of the modular climbing tree as defined in any of the preceding claims 1 - 14 is connected to a first pole (34), accessory or surface,
- another second connecting component (1;21;36;41) of the modular climbing tree as defined in any of the preceding claims 1 - 14 is connected to a second pole (34), accessory or surface,
- and the at least one male coupling element (5a,5b) and the at least one female coupling element (6a,6b) on the second connecting part (4;22;4';43) of the at least one connecting component (1;21;36;41) is engaged to interlock with the at least one female coupling element (6a,6b) and at least one male coupling element (5a,5b) on the second connecting part (4;22;4';43) of the other connecting component (1;21;36;41).

16. A method according to claim 15, **characterised in that** at least one of the at least one connecting component (1;21;36;41) and the other connecting component (1;21;36;41) are further engaged to interlock by rotating any of the associated first pole (34) and second pole (34) or respective connecting components on the poles clockwise or counter-clockwise.
